# EUROPEAN PATENT APPLICATION

(11) **EP 2 184 834 A1**
(43) Date of publication of application: **12.05.2010**
(21) Application number: 08783974.2
(22) Date of filing: 14.08.2008
(51) Int. Cl.: H02K 1/16

(54) **A GENERATOR WITH MAGNETIC-PATH-ENCLOSING COILS**

(30) Priority: 14.08.2007 CN 200710054952; 30.10.2007 CN 200710189872
(71) Applicant: Liu, Gang, Zhengzhou Henan 450-006 (CN)
(72) Inventor: LIU, Ziyi, Zhengzhou Henan 450006 (CN)
(74) Representative: Price, Nigel John King
(86) International application number: PCT/CN2008/071983
(87) International publication number: WO 2009/021461

(57) **Abstract**

A generator with closed-magnetic-path coils includes a stator (8), a rotor (7), a casing (10) and a transmission shaft (6). A magnetic conductive bracket (9) and a coil winding (2) are fixed to the transmission shaft (6) to form the stator (8). One pole surface of a magnet (4) on the rotor (7) is corresponding to a profile surface of the coil winding (2). A prime mover drives the rotor (7) and the magnet (4) to rotate, and the magnet (4) cuts the coil winding (2) to induce a current.

## Description

### FIELD OF THE TECHNOLOGY

The present invention relates to a generator, and more particularly to a generator with closed-magnetic-path coils having a closed magnetic path formed after a coil on a stator is cut by magnetic force lines to induce a current.

### BACKGROUND

Currently, in most of well-known generators, a prime mover drives a rotor to rotate, so as to cause magnetic induction at a coil to generate a current. However, a magnetic field induced by the coil tends to impede the rotation of the rotor. The electric energy obtained by this method is quite undesirable. Therefore, it is quite urgent for people to solve the problem of raising power converting efficiency of the generator. A patent application with a publication number of CN1393974 provides a "Generator Excited by Both Electromagnet and Permanent Magnet" which solves a problem of voltage adjustment in a permanent magnet generator. A patent application with a publication number of CN1421983 provides a "Great-capacity Single-phase Brush-less Synchronous Generator" which solves a problem that the single-phase generator develops towards a great capacity. However, in the above technical solutions, the repulsion/attraction force of the magnetic field still exists when the stator and the rotor of the generator are working, and the work of the rotor still needs to overcome the repulsion/attraction force of the magnetic field. Therefore, the problem of low work-energy converting efficiency of the generator is not solved in the prior art.

### SUMMARY

The present invention is directed to a generator with closed-magnetic-path coils, so as to effectively solve the technical problem of low work-energy converting efficiency of the generator in the prior art, thereby enabling the generator to convert electric energy with high efficiency.

In order to achieve the above objective, the present invention provides a generator with closed-magnetic-path coils, which includes a casing, a base, a stator, a rotor, a transmission shaft, and a fan. A magnetic conductive material is fixed to the transmission shaft, a magnet is fixed to the magnetic conductive material, and the magnetic conductive material and the magnet form the rotor. A magnetic conductive bracket is fixed to the casing, a coil winding or a conductor winding is fixedly installed on the magnetic conductive bracket, and the magnetic conductive bracket and the coil winding or the conductor winding form the stator. The transmission shaft and the casing are in rotatable connection, one end of the transmission shaft is fixed to a drive wheel for inputting power, and the other end is fixed to the fan. The magnetic conductive material is fixed to the casing to serve as a mechanical support of a rotating part, or the casing is formed by the magnetic conductive material and serves as a mechanical support machine of the rotating part. One pole surface of the magnet on the rotor is corresponding to a profile surface of the coil winding or the conductor winding on the stator, and the other pole surface of the magnet is fixed to the rotor magnetic conductive material, fixed to the transmission shaft, or fixed to the magnetic conductive material and fixedly installed on the transmission shaft. The coil winding or the conductor winding and a drive motor share the rotor. A prime mover drives the rotor to rotate and the magnet rotates along with the rotor, unipolar magnetic force lines of the magnet cut the coil winding or the conductor winding and the coil winding or the conductor winding is induced to generate a current, an interior and an exterior of the coil winding or the conductor winding are fixedly connected through the magnetic conductive material, and magnetic force lines in a magnetic field generated by the current in the coil winding or the conductor winding concentrate at and pass through the magnetic conductive material to form a closed loop. The magnetic force lines of the magnet on the rotor pass through the magnetic conductive material in the coil winding or the conductor winding, and return back into the magnet after passing through the magnetic conductive material on the casing to the magnetic conductive material on the rotor, so as to form a closed loop of the magnetic force lines of the magnet on the rotor.

A material of a conductive coil or a conductor in the coil winding or the conductor winding is an integral structure formed by at least one conductive material and at least one magnetic conductive material, the conductive material is an outer layer part of the conductive coil or the conductor, and the magnetic conductive material is an inner material part of the conductive coil or the conductor.

A material of a conductive coil or a conductor in the coil winding or the conductor winding is formed by at least one conductive material and at least one magnetic conductive material, and the conductive material and the magnetic conductive material are layer structures disposed at an interval.

The interior and the exterior of the coil winding or the conductor winding are fixedly connected through at least one magnetic conductive material, and the magnetic conductive material forms the magnetic conductive bracket.

The magnetic conductive bracket is formed by fixedly connecting at least one magnetic conductive material= to the magnetic conductive material on the casing, and the magnetic conductive bracket is annularly and fixedly arranged in the casing.

At least one low magnetic conductive material is disposed between adjacent magnetic conductive brackets, and a distance between the adjacent magnetic conductive brackets is greater than 0.001 mm.

The coil winding or the conductor winding is formed by at least one or more windings connected in series or in parallel.

The magnet is formed by at least one permanent magnet, at least one electromagnet, or at least one permanent magnet and at least one electromagnet.

The coil winding or the conductor winding is formed by at least one conductive material arranged in a planar shape, an annular shape, or a cylindrical shape.

The coil winding or the conductor winding and an excitation coil in the drive motor share the same rotor and the same magnet.

The present invention provides a generator with closed-magnetic-path coils, which includes a stator, a rotor, a casing, and a transmission shaft. A coil on the stator is cut by magnetic force lines and induced to generate a current. As the magnetic force lines tend to pass through a magnetic conductive material that is easiest to pass, the magnetic force lines in a magnetic field generated by the current of the coil on the stator and the magnetic force lines of the magnet on the rotor are closed in two loops formed by the magnetic conductive material, no magnetic repulsion force is generated between the rotor and the stator, and an attraction force of the rotor to the magnetic conductive material on the stator is symmetrically equalized to counteract. Therefore, the generator of the present invention only needs to work to overcome its own friction force and compensate losses of an applied force of magnetic leakage in the casing. Moreover, the prime mover requires a small power to drive the rotor to rotate, so as to enable the generator with closed-magnetic-path coils to generate and output a current for work application. The present invention has a reasonable structure and is convenient to use, causes low noises in operation, and achieves high work-energy converting efficiency, and is thus widely applied in automobiles, ships, mobile power sources, and other electric generating equipment.

### BRIEF DESCRIPTION OF THE DRAWINGS

FIG. 1 is a schematic structural view of a generator with closed-magnetic-path coils according to the present invention;

FIG. 2 is a schematic view of a passing course of magnetic force lines of a magnet on a rotor in the structure as shown in FIG. 1;

FIG. 3 is a cross-sectional view along a direction A-A in FIG. 1, which illustrates a passing course of magnetic force lines in a magnetic field of a coil winding on a stator in the structure as shown in FIG. 1;

FIG. 4 is a cross-sectional view along the direction A-A in FIG. 1, which illustrates another passing course of the magnetic force lines in the magnetic field of the coil winding on the stator in the structure as shown in FIG. 1;

FIG 5 is a cross-sectional view along the direction A-A in FIG. 1, which illustrates a passing course of magnetic force lines in a magnetic field of a conductor winding on the stator in the structure as shown in FIG. 1;

FIG. 6 is a cross-sectional view along the direction A-A in FIG. 1, which illustrates another passing course of the magnetic force lines in the magnetic field of the conductor winding on the stator in the structure as shown in FIG. 1;

FIG. 7 is a schematic structural view of the present invention adopting a single-pole excitation coil or conductor;

FIG. 8 is a schematic structural view of the present invention adopting a double-pole excitation coil or conductor;

FIG. 9 is a schematic structural view of the present invention adopting a multi-pole excitation coil or conductor;

FIG. 10 is a schematic structural view of the present invention in which the conductor and an excitation coil winding in a drive motor share the same rotor;

FIG. 11 is a schematic structural view of the present invention in which the conductor and the excitation coil winding in the drive motor share a magnet on the same rotor for excitation;

FIG. 12 is a schematic structural view of the coil winding according to the present invention; and

FIG. 13 is a schematic structure view of the conductor winding according to the present invention.

### DETAILED DESCRIPTION

The present invention is further described in detail below with reference to the accompanying drawings.

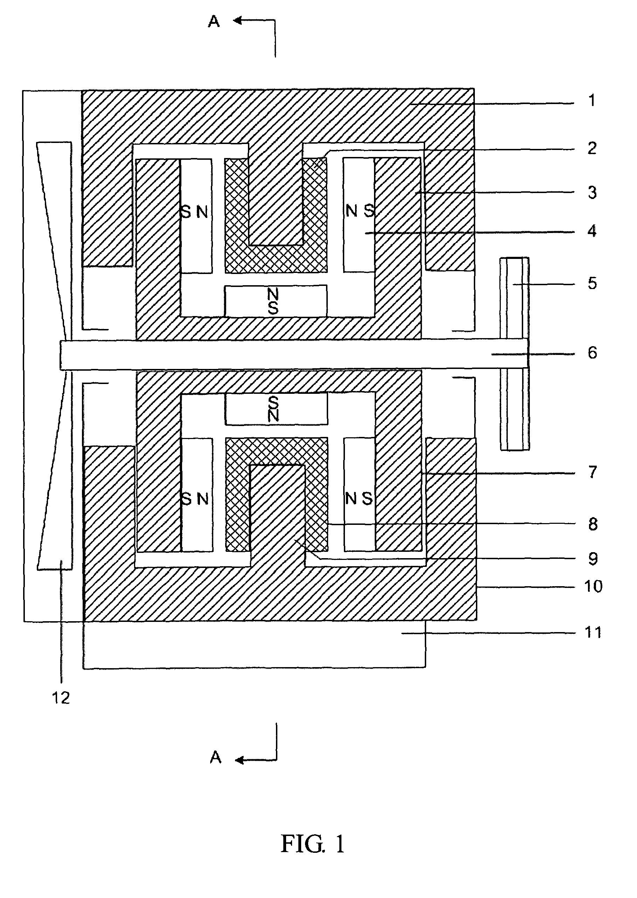

FIG. 1 is a schematic structural view of a generator with closed-magnetic-path coils according to the present invention. Referring to FIG. 1, the generator with closed-magnetic-path coils of the present invention includes a magnetic conductive material 1, a coil winding 2, a rotor magnetic conductive material 3, a magnet 4, a drive wheel 5, a transmission shaft 6, a rotor 7, a stator 8, a magnetic conductive bracket 9, a casing 10, a base 11, and a fan 12. The transmission shaft 6 and the casing 10 are in rotatable connection, one end of the transmission shaft 6 is fixed to the drive wheel 5 for inputting power, and the other end is fixed to the fan 12. The magnetic conductive material 1 is fixed to the casing 10 to serve as a mechanical support of a rotating part; or the casing is formed by the magnetic conductive material 1 and serves as a mechanical support machine of the rotating part. The magnetic conductive bracket 9 is fixed to the casing 10, the coil winding 2 is fixedly installed on the magnetic conductive bracket 9, and the magnetic conductive bracket 9 and the coil winding 2 form the stator 8. The rotor magnetic conductive material 3 is fixed to the transmission shaft 6; at least one magnet 4 is fixed to the rotor magnetic conductive material 3, and the rotor magnetic conductive material 3 and the magnet 4 form the rotor 7. One pole surface of the magnet 4 is corresponding to a profile surface of the coil winding 2 on the stator 8, and the other pole surface of the magnet 4 is fixed to the rotor magnetic conductive material 3 on the rotor 7. An interior and an exterior of the coil winding 2 on the stator 8 are fixedly connected through at least one magnetic conductive material 1 to form the magnetic conductive bracket 9, and the magnetic conductive bracket 9 has at least one magnetic conductive material 1 fixedly connected to the casing 10. When the generator is in operation, a prime mover propels the drive wheel 5 and the drive wheel 5 drives the rotor 7 to rotate, so that the magnet 4 fixed to the rotor 7 rotates along with the rotor 7. In this case, unipolar magnetic force lines of the magnet 4 cut the coil winding 2, and the coil winding 2 is induced to generate a current.

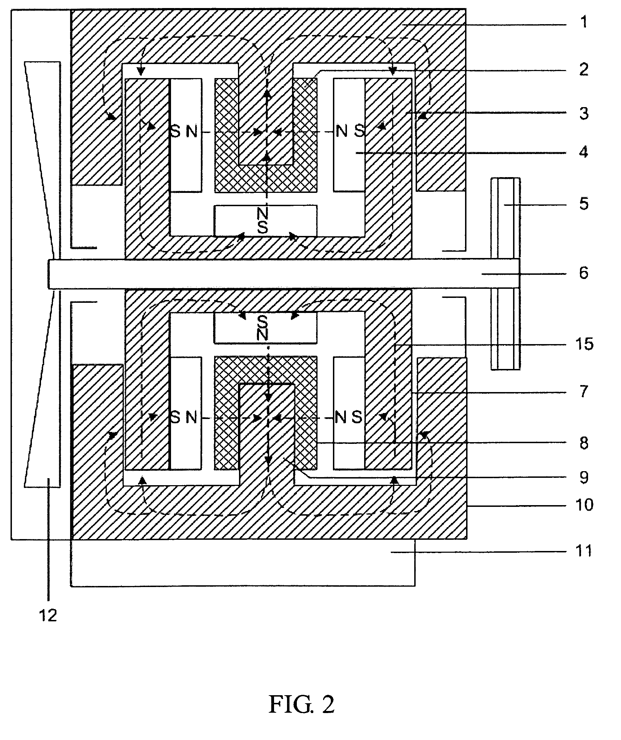

FIG. 2 is a schematic view of a passing course of the magnetic force lines of the magnet on the rotor in the structure as shown in FIG. 1. Referring to FIG. 2, magnetic force lines 15 of the magnet 4 on the rotor 7 start from an N pole, enter the coil winding 2 through a gap between the magnet 4 and the coil winding 2 and then enter the magnetic conductive material 1 after passing through the coil winding 2, and finally return to the magnet 4 after passing through the magnetic conductive material 1 and the rotor magnetic conductive material 3, thereby forming a closed loop of the magnetic force lines 15 of the magnet on the rotor 7.

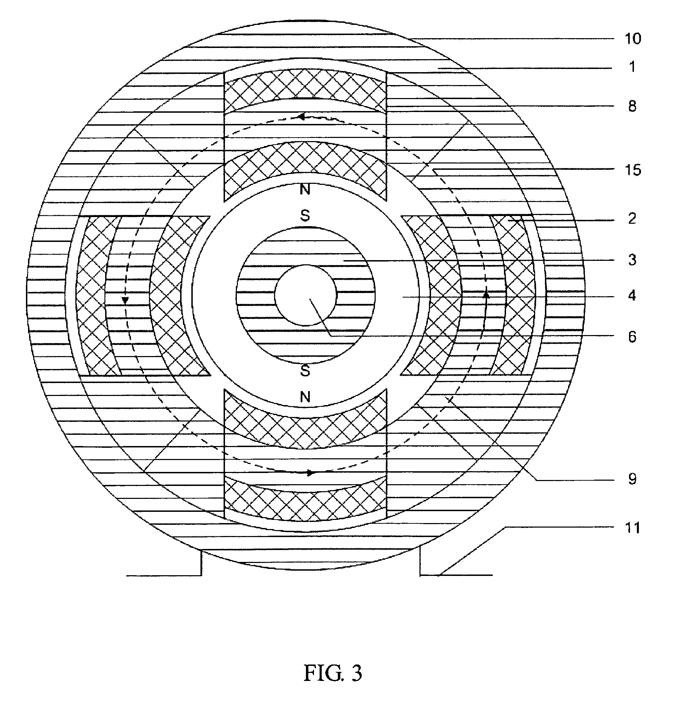

FIG. 3 is a cross-sectional view along a direction A-A in FIG. 1, which illustrates a passing course of magnetic force lines in a magnetic field of the coil winding on the stator in the structure as shown in FIG. 1. Referring to FIG. 3, the U-shaped magnetic conductive material 1 is fixedly connected in the casing 10, a U-shaped exterior of the magnetic conductive material 1 and the adjacent magnetic conductive material 1 are connected to form the magnetic conductive bracket 9, the magnetic conductive bracket 9 has an annular shape and is fixedly arranged in the casing 10, and the coil winding 2 is fixedly installed on the magnetic conductive bracket 9. The prime mover drives the rotor 7 to rotate and the magnet 4 rotates along with the rotor 7, the unipolar magnetic force lines of the magnet 4 cut the coil winding 2 and the coil winding 2 is induced to generate a current, and the magnetic force lines 15 in the magnetic field generated by the current in the coil winding 2 concentrate at and pass through the annular magnetic conductive bracket 9 formed by the magnetic conductive material 1, thereby forming a closed loop of the magnetic force lines in the magnetic field generated by the current in the coil winding 2.

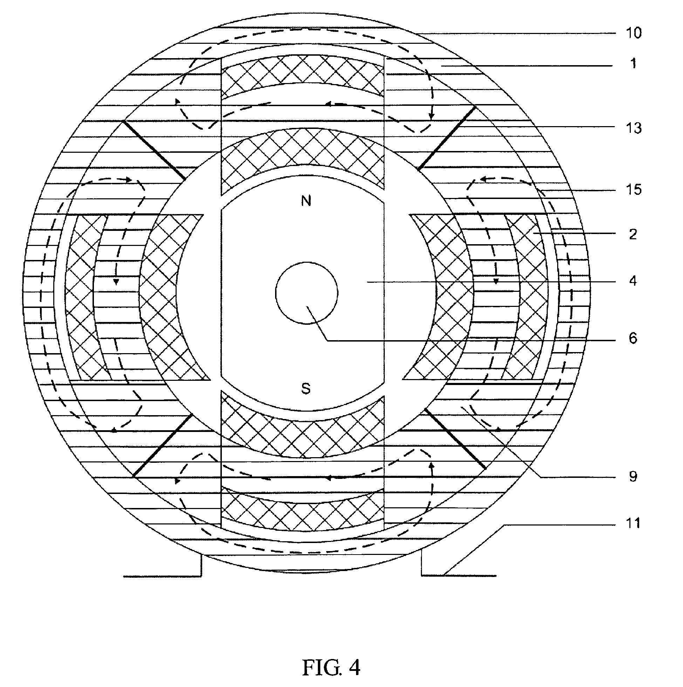

FIG. 4 is a cross-sectional view along the direction A-A in FIG. 1, which illustrates another passing course of the magnetic force lines in the magnetic field of the coil winding on the stator in the structure as shown in FIG 1. Referring to FIG. 4, the U-shaped magnetic conductive material 1 is fixedly connected in the casing 10, a U-shaped exterior of the magnetic conductive material 1 is spaced apart from an adjacent magnetic conductive material 1 by using a low magnetic conductive material 13 and a distance between the two adjacent magnetic conductive material remains to be greater than 0.001 mm, and the two parts of the magnetic conductive material 1 are fixed to each other to become an integer, so as to form the magnetic conductive bracket 9. The magnetic conductive bracket 9 has an annular shape and is fixedly arranged in the casing 10, and the coil winding 2 is fixedly installed on the magnetic conductive bracket 9. The prime mover drives the rotor 7 to rotate and the magnet 4 rotates along with the rotor 7, the unipolar magnetic force lines of the magnet 4 cut the coil winding 2 and the coil winding 2 is induced to generate a current, and the magnetic force lines 15 in the magnetic field generated by the current in the coil winding 2 concentrate at and pass through the U-shaped magnetic conductive material 1 and the magnetic conductive material 1 on the casing, thereby forming a closed loop of the magnetic force lines in the magnetic field generated by the current in the coil winding 2.

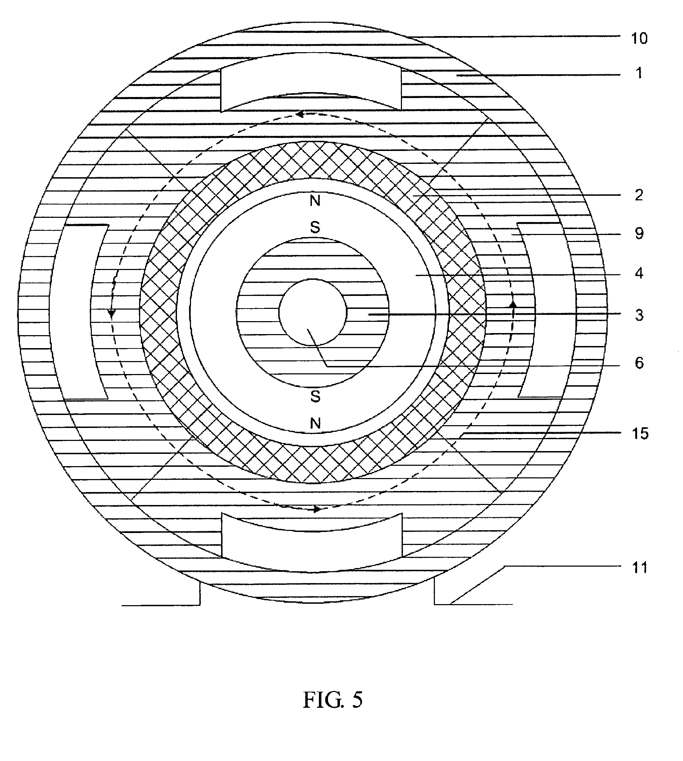

FIG. 5 is a cross-sectional view along the direction A-A in FIG. 1, which illustrates a passing course of magnetic force lines in a magnetic field of a conductor winding on the stator in the structure as shown in FIG. 1. Referring to FIG 5, the U-shaped magnetic conductive material 1 is fixedly connected in the casing 10, a U-shaped exterior of the magnetic conductive material 1 and the adjacent magnetic conductive material 1 are connected to form the magnetic conductive bracket 9, the magnetic conductive bracket 9 has an annular shape and is fixedly arranged in the casing 10, and the conductor winding 2 is fixedly installed on the magnetic conductive bracket 9. The prime mover drives the rotor 7 to rotate and the magnet 4 rotates along with the rotor 7, the unipolar magnetic force lines of the magnet 4 cut the conductor winding 2 and the conductor winding 2 is induced to generate a current, and the magnetic force lines 15 in the magnetic field generated by the current in the conductor winding 2 concentrate at and pass through the annular magnetic conductive bracket 9 formed by the magnetic conductive material 1, thereby forming a closed loop of the magnetic force lines in the magnetic field generated by the current in the conductor winding 2.

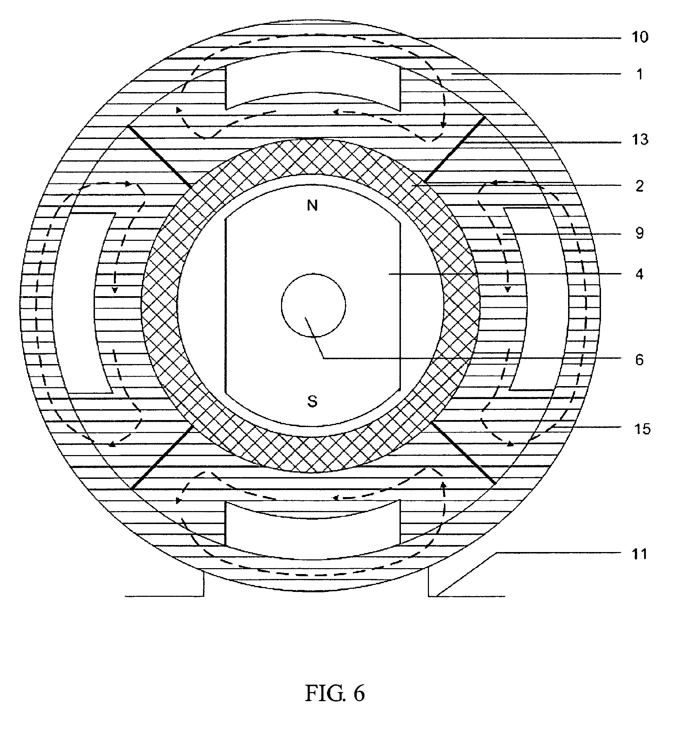

FIG. 6 is a cross-sectional view along the direction A-A in FIG. 1, which illustrates another passing course of the magnetic force lines in the magnetic field of the conductor winding on the stator in the structure as shown in FIG. 1. Referring to FIG 6, the U-shaped magnetic conductive material 1 is fixedly connected in the casing 10, a U-shaped exterior of the magnetic conductive material 1 is spaced apart from an adjacent magnetic conductive material 1 by using a low magnetic conductive material 13 and a distance between two adjacent magnetic conductive material remains to be greater than 0.001 mm, and the two parts of the magnetic conductive material 1 are fixed to each other to become an integer, so as to form the magnetic conductive bracket 9. The magnetic conductive bracket 9 has an annular shape and is fixedly arranged in the casing 10, and the conductor winding 2 is fixedly installed on the magnetic conductive bracket 9. The prime mover drives the rotor 7 to rotate and the magnet 4 rotates along with the rotor 7, the unipolar magnetic force lines of the magnet 4 cut the conductor winding 2 and the conductor winding 2 is induced to generate a current, and the magnetic force lines 15 in the magnetic field generated by the current in the conductor winding 2 concentrate at and pass through the U-shaped magnetic conductive material 1 and the magnetic conductive material 1 on the casing, thereby forming a closed loop of the magnetic force lines in the magnetic field generated by the current in the conductor winding 2.

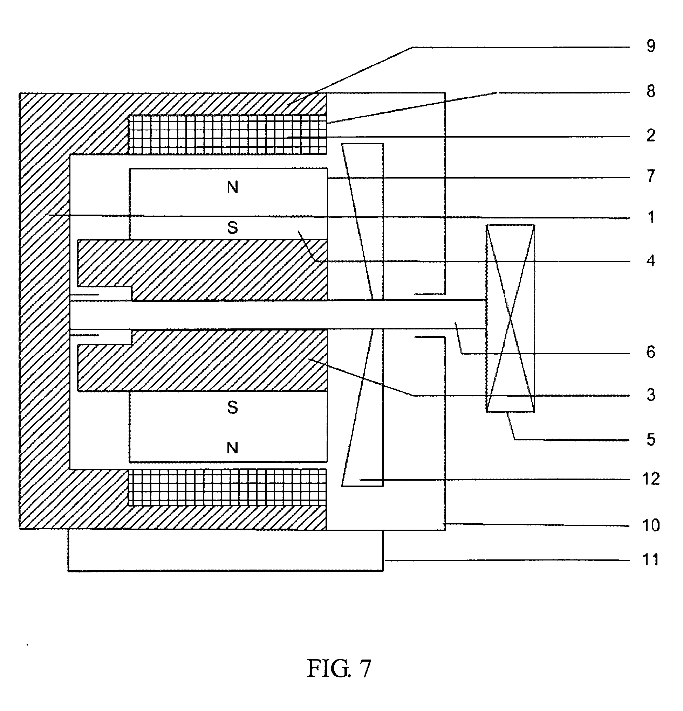

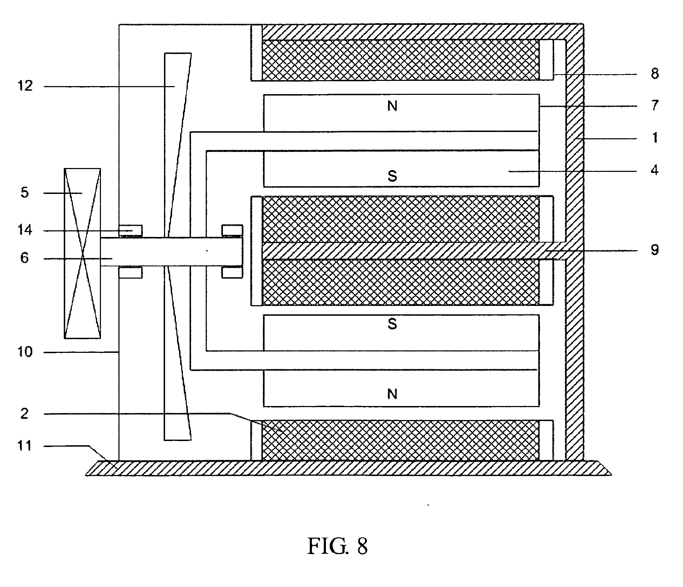

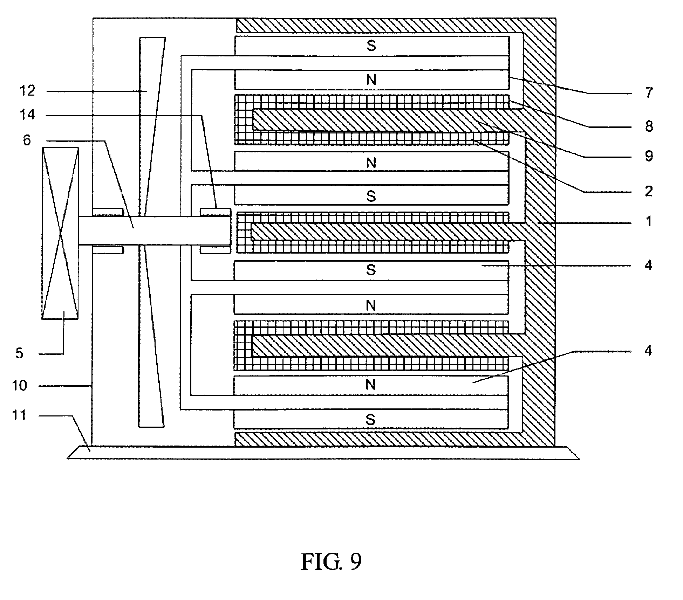

FIG. 7 is a schematic structural view of the present invention adopting a single-pole excitation coil or conductor, FIG 8 is a schematic structural view of the present invention adopting a double-pole excitation coil or conductor, and FIG. 9 is a schematic structural view of the present invention adopting a multi-pole excitation coil or conductor. Referring to FIGs 7, 8, and 9, the generator with closed-magnetic-path coils of the three structures according to this embodiment includes a magnetic conductive material 1, a coil winding or a conductor winding 2, a rotor magnetic conductive material 3, a magnet 4, a drive wheel 5, a transmission shaft 6, a rotor 7, a stator 8, a magnetic conductive bracket 9, a casing 10, a base 11, and a fan 12. The transmission shaft 6 and the casing 10 are in sliding connection through a bearing 14, one end of the transmission shaft 6 is fixed to the drive wheel 5 for inputting power, and the other end is fixed to the fan 12. The magnetic conductive material 1 is fixed to the casing 10 to serve as a mechanical support of a rotating part; or the casing is formed by the magnetic conductive material 1 and serves as a mechanical support machine of the rotating part. The magnetic conductive bracket 9 is fixed to the casing 10, the coil winding or the conductor winding 2 is fixedly installed on the magnetic conductive bracket 9, and the magnetic conductive bracket 9 and the coil winding or the conductor winding 2 form the stator 8. The rotor magnetic conductive material 3 is fixed to the transmission shaft 6; at least one magnet 4 is fixed to the rotor magnetic conductive material 3, and the rotor magnetic conductive material 3 and the magnet 4 form the rotor 7. One pole surface of the magnet 4 is corresponding to a profile surface of the coil winding or the conductor winding 2 on the stator 8, and the other pole surface of the magnet 4 is fixed to the rotor magnetic conductive material 3 on the rotor 7. An interior and an exterior of the coil winding 2 on the stator 8 are fixedly connected through at least one magnetic conductive material 1 to form the magnetic conductive bracket 9, and the magnetic conductive bracket 9 has at least one magnetic conductive material 1 fixedly connected to the casing 10. A prime mover propels the drive wheel 5 and the drive wheel 5 forces the rotor 7 to rotate, so that the magnet 4 fixed on the rotor 7 rotates along with the rotor 7. In this case, unipolar magnetic force lines of the magnet 4 cut the coil winding or the conductor winding 2, and the coil winding or the conductor winding 2 is induced to generate a current. The difference between the three structures as shown in FIGs 7, 8, and 9 is that, the N-pole or S-pole of the magnet on the rotor 7 in FIG. 7 excites the coil winding or the conductor winding 2, the N-pole and an S-pole of the magnet on the rotor 7 in FIG. 8 both excite the coil winding or the conductor winding 2, and the N-pole and an S-pole of at least two magnets on the rotor 7 in FIG. 9 all excite the coil winding or the conductor winding 2.

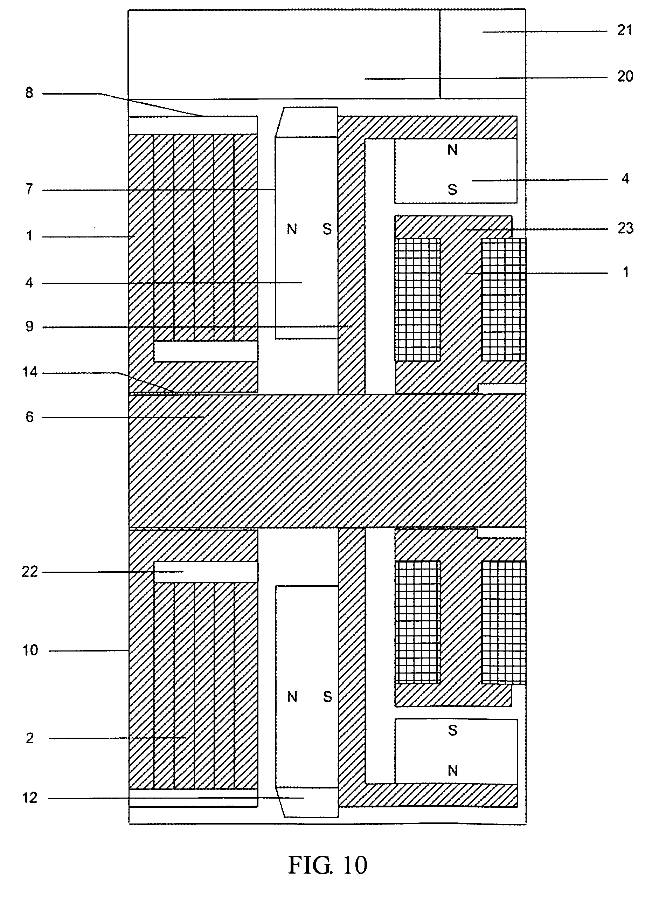

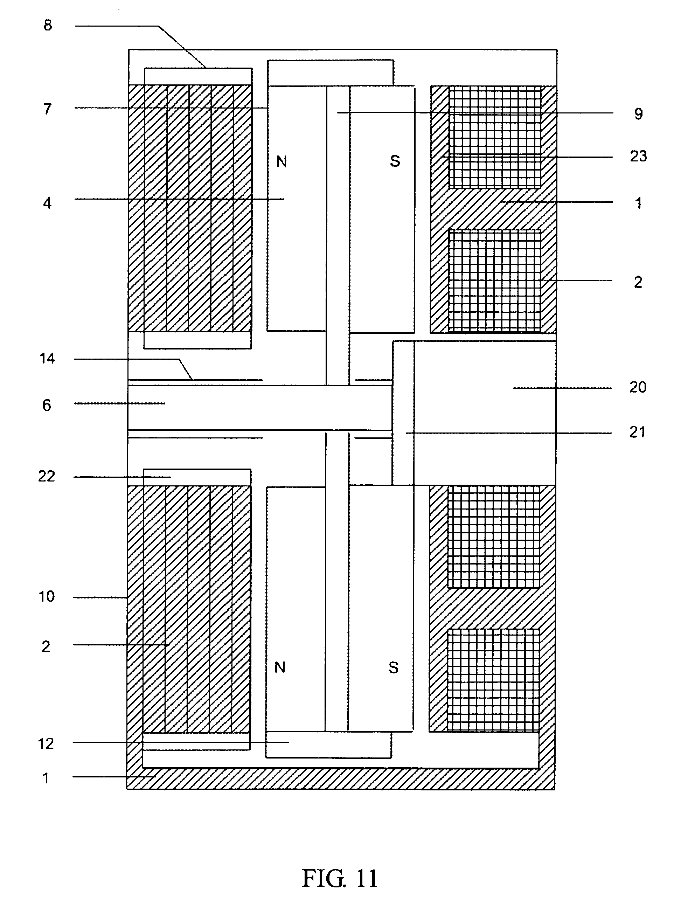

FIG. 10 is a schematic structural view of the present invention in which the conductor and the excitation coil winding in the drive motor share the same rotor, and FIG. 11 is a schematic structural view of the present invention in which the conductor and the excitation coil winding in the drive motor share a magnet on the same rotor for excitation. Referring to FIGs 10 and 11, the generator with closed-magnetic-path coils of the two structures according to this embodiment includes a magnetic conductive material 1, a coil winding or a conductor winding 2, a magnet 4, a transmission shaft 6, a magnetic conductive bracket or a magnetic conductive bracket 9, a casing 10, and a fan 12, and further includes an electromagnetic shoe 23 in a drive motor, a battery 20, a controller 21, and a current output end 22, in which the current output end 22 includes conductive posts, conductive boards, or conductive wires and the like. The magnet 4 on the rotor 7 is fixedly connected to the magnetic conductive bracket or the magnetic conductive bracket 9. The fan 12 is fixedly installed on the magnetic conductive bracket or the magnetic conductive bracket 9. The magnetic conductive bracket or the magnetic conductive bracket 9 is fixed to the transmission shaft 6. The transmission shaft 6 is formed by the magnetic conductive material, and is rotatable-connected and installed in a bearing 14. The bearing 14 is fixed to the casing 10. One end of the transmission shaft 6 is correspondingly surrounded by the magnetic conductive material of a coil bracket fixedly installed on the casing 10, and the other end is correspondingly surrounded by the magnetic conductive material of the coil winding or the conductor winding 2 fixedly installed on the casing 10. The casing 10 has the magnetic conductive material 1 serving as a mechanical support of a rotating part. A stator 8 is fixedly installed in the casing 10, and the stator 8 is formed by the magnetic conductive material 1 and the coil winding or the conductor winding 2. The coil winding or the conductor winding 2 is fixed on the magnetic conductive material 1, a conductive material and the magnetic conductive material of an interior of the coil winding or the conductor winding 2 are layer structures disposed at an interval, and an exterior thereof corresponding to the magnet 4 on the rotor 7 is a magnetic conductive material layer. A profile surface of the coil winding or the conductor winding 2 corresponding to the rotor 7 is a plane, and an appearance thereof is in an annular shape. As shown in FIG. 10, the motor and the generator with closed-magnetic-path coils of the present invention are combined in the same casing 10 and share the same rotor 7. One pole surface of the magnet 4 is corresponding to the profile surface of the coil winding or the conductor winding 2, and the other pole surface is connected to the magnetic conductive bracket 9 of the rotor 7. One pole surface of another magnet 4 is corresponding to the electromagnetic shoe 23 in the drive motor, and the other pole surface is connected to the magnetic conductive bracket 9 of the same rotor 7. As shown in FIG. 11, the motor and the generator with closed-magnetic-path coils of the present invention are combined in the same casing 10, and share the same rotor 7 and the same magnet 4. One pole surface of the magnet 4 is corresponding to the profile surface of the coil winding or the conductor winding 2, and the other pole surface is corresponding to a profile surface of the electromagnetic shoe 23 in the motor.

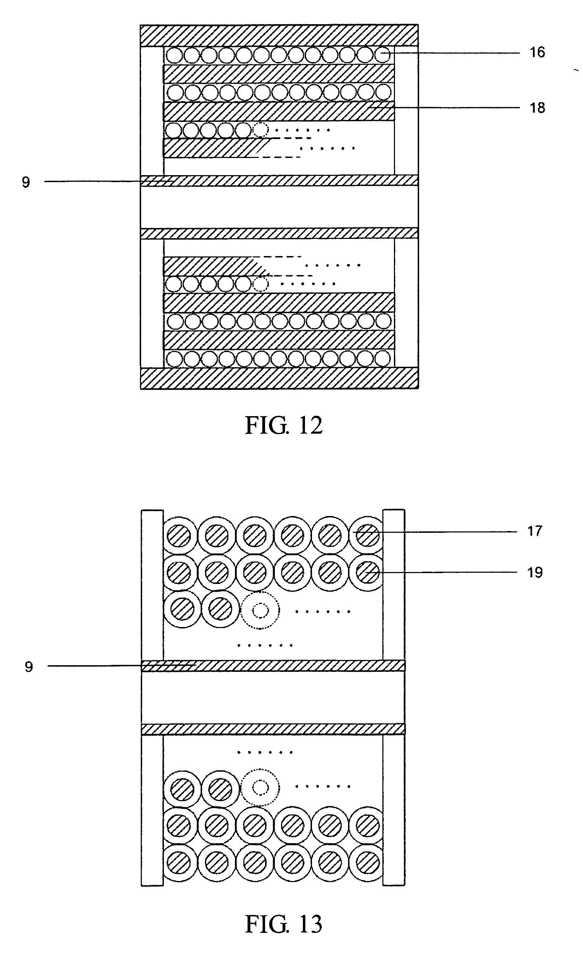

FIG. 12 is a schematic structural view of the coil winding according to the present invention, and FIG. 13 is a schematic structure view of the conductor winding according to the present invention. Referring to FIG. 12, the low magnetic conductive material serves as two side plates of a framework of the winding, and at a center of the framework, the magnetic conductive bracket 9 serves as a base plate of the framework of the winding to support the two side plates of the framework. The coil winding is fabricated by layers, in which a layer of insulating material is winded from the base plate, a layer of conductors or conductive coils 16 is winded, then a layer of magnetic conductive material 18 is winded, and a layer of magnetic conductive material 18 is further placed on the exterior of the winding, so as to obtain the winding. Referring to FIG. 13, the low magnetic conductive material serves as two side plates of a framework of the winding, and at a center of the framework, the magnetic conductive bracket 9 serves as a base plate of the framework of the winding to support the two side plates of the framework. The coil winding is fabricated by layers, in which a layer of insulating material is winded from the base plate, a layer of conductors or conductive coils having an exterior formed of a conductive material (copper) 17 and an interior formed of a magnetic conductive material 19 is winded, and a layer of magnetic conductive material 19 may also be placed on the exterior of the winding, so as to obtain the winding.

In the technical solution of the generator with closed-magnetic-path coils according to the present invention, the winding on the stator 8 has the magnetic conductive material 1, such that the coils or the conductors and the magnetic conductive material are combined to become an integer to form the coil winding 2 or the conductor winding 2. The prime mover drives the rotor 7 to rotate, and the magnet 4 rotates along with the rotor 7. The magnetic force lines of the magnet 4 cut the coil winding 2 or the conductor winding 2, and the magnetic force lines 15 first pass through the magnetic conductive material 18 through the gap, and then enter the magnetic conductive material 18 or the magnetic conductive material 19 after passing through the layer of the conductors or coils 16 or the conductive material 17, thus reaching the magnetic conductive bracket 9 after repeatedly passing through several layers of the magnetic conductive material 18 or the magnetic conductive material 19 and the layer of the conductors or coils 16 or the conductive material 17. Afterward, the magnetic force lines 15 pass through the magnetic conductive material 1 of the casing 10, then pass through the gap between the magnetic conductive material 1 of the casing 10 and the rotor 7 or the transmission shaft 6, reach the rotor 7 or the transmission shaft 6, and return to the magnet 4, thereby forming a loop of the magnetic force lines of the magnet 4 on the rotor 7. The winding 2 on the stator 8 is fixed on the magnetic conductive bracket 9, the interior and the exterior of the winding 2 are fixedly connected through the magnetic conductive material 1 to form the magnetic conductive bracket 9, or the magnetic conductive bracket 9 is spaced apart from an adjacent magnetic conductive bracket 9 by a low magnetic conductive material 13, the magnet 4 cuts the winding 2 and the winding 2 is induced to generate a current, the current in the winding 2 causes the magnetic force lines 15 in a magnetic field, and the magnetic force lines tend to pass through the magnetic conductive material that is easiest to pass. Thereby, the magnetic force lines 15 in the magnetic field generated by the current in the winding 2 pass through the annular magnetic conductive material 1, or start from the magnetic conductive bracket 9 and return to the magnetic conductive bracket 9 after passing through the magnetic conductive material 1 of the casing 10, so as to form a closed loop of the magnetic force lines 15 in the magnetic field generated by the current in the winding 2.

In the generator with closed-magnetic-path coils of the present invention, the magnetic field generated by the current in the coil or the conductor applies a small force to the magnet 4 on the rotor 7, no magnetic repulsion force is generated between the rotor 7 and the stator 8, and an attraction force of the rotor 7 to the magnetic conductive material 18 or 19 of the winding 2 on the stator 8 is symmetrically equalized to counteract. Therefore, the generator of the present invention only needs to work to overcome its own friction force and compensate losses of an applied force of magnetic leakage in the casing. Moreover, the prime mover requires a small power to drive the rotor to rotate, so as to enable the generator with closed-magnetic-path coils to generate and output a current for work application.

The generator with closed-magnetic-path coils of the present invention may be designed according to actual electric power requirements. In practice, the coil winding or the conductor winding of the generator with closed-magnetic-path coils according to the present invention is formed by at least one or more windings connected in series or in parallel, and the magnet on the rotor may be formed by at least one permanent magnet, or formed by at least one electromagnet, or formed by at least one permanent magnet and at least one electromagnet, thereby increasing the power of the generator of the present invention, so as to satisfy the electric power requirements for various activities at various locations.

Referring to FIG. 1, an operating process of the generator with closed-magnetic-path coils according to the present invention is described as follows. The prime mover drives the rotor 7 to rotate and the magnet 4 on the rotor 7 rotates along with the rotor 7, the unipolar magnetic force lines of the magnet 4 cut the coil winding 2 and the coil winding 2 is induced to generate a current, the interior and the exterior of the coil winding 2 are fixedly connected through the magnetic conductive material 1, and the magnetic force lines 15 in the magnetic field generated by the current in the coil winding 2 concentrate at and pass through the magnetic conductive material 1, so as to form a closed loop. The magnetic force lines 15 of the magnet 4 on the rotor 7 pass through the magnetic conductive material 1 in an inner core of the coil winding 2, and return to the magnet 4 after passing through the magnetic conductive material 1 on the casing 10 and the rotor magnetic conductive material 3 on the rotor 7, so as to form a closed loop of the magnetic force lines 15 of the magnet 4 on the rotor 7. The magnetic field generated by the current in the coil winding 2 applies a small force to the magnet 4 on the rotor 7, no magnetic repulsion force is generated between the rotor 7 and the stator 8, and an attraction force of the rotor 7 to the magnetic conductive material 18 or 19 on the stator 8 is symmetrically equalized to counteract. Therefore, the prime mover only requires a small power to drive the generator of the present invention to work, as long as the generator overcomes its own friction force and compensates losses of an applied force of magnetic leakage in the casing, such that the generator is enabled to generate and output a current for work application. When the prime mover drives the rotor of the generator to rotate, the rotor stably rotates when its rotation speed reaches a certain value, and the current generated by the generator is a fixed value and remains unchanged. When the prime mover stops working, the rotor of the generator also stops rotating, and accordingly the generator of the present invention stops operating.

## Claims

1. A generator with closed-magnetic-path coils, comprising a casing, a base, a stator, a rotor, a transmission shaft, and a fan, wherein a magnetic conductive material is fixed to the transmission shaft, a magnet is fixed to the magnetic conductive material, and the magnetic conductive material and the magnet form the rotor; a magnetic conductive bracket is fixed to the casing, a coil winding or a conductor winding is fixedly installed on the magnetic conductive bracket, and the magnetic conductive bracket and the coil winding or the conductor winding form the stator; the transmission shaft and the casing are in rotatable connection, one end of the transmission shaft is fixed to a drive wheel for inputting power, and the other end is fixed to the fan; a magnetic conductive material is fixed to the casing to serve as a mechanical support of a rotating part, or the casing itself is formed by the magnetic conductive material and serves as a mechanical support machine of the rotating part; one pole surface of the magnet on the rotor is corresponding to a profile surface of the coil winding or the conductor winding on the stator, and the other pole surface of the magnet is fixed to the rotor magnetic conductive material, fixed to the transmission shaft, or fixed to the magnetic conductive material as a whole then fixedly installed on the transmission shaft; the coil winding or the conductor winding and a drive motor share the rotor; a prime mover drives the rotor to rotate and the magnet rotates along with the rotor, unipolar magnetic force lines of the magnet cut the coil winding or the conductor winding, the coil winding or the conductor winding is induced to generate current, an interior and an exterior of the coil winding or the conductor winding are fixedly connected through the magnetic conductive material, and magnetic force lines in a magnetic field generated by the current in the coil winding or the conductor winding concentrate in and pass through the magnetic conductive material to form a closed loop; and the magnetic force lines of the magnet on the rotor pass through the magnetic conductive material in the coil winding or the conductor winding, and return back into the magnet after passing through the magnetic conductive material on the casing to the magnetic conductive material on the rotor, so as to form a closed loop of the magnetic force lines of the magnet on the rotor.

2. The generator with closed-magnetic-path coils according to claim 1, wherein a material of a conductive coil or a conductor in the coil winding or the conductor winding is an integral structure formed by at least one conductive material and at least one magnetic conductive material, the conductive material is an outer layer part of the conductive coil or the conductor, and the magnetic conductive material is an inner material part of the conductive coil or the conductor.

3. The generator with closed-magnetic-path coils according to claim 1, wherein a material of a conductive coil or a conductor in the coil winding or the conductor winding is formed by at least one conductive material and at least one magnetic conductive material, and the conductive material and the magnetic conductive material are layer structures disposed at an interval.

4. The generator with closed-magnetic-path coils according to claim 1, wherein the interior and the exterior of the coil winding or the conductor winding are fixedly connected through at least one magnetic conductive material, and the magnetic conductive material forms the magnetic conductive bracket.

5. The generator with closed-magnetic-path coils according to claim 1, wherein the magnetic conductive bracket is formed by fixedly connecting at least one magnetic conductive material to the magnetic conductive material on the casing, and the magnetic conductive bracket is annularly and fixedly arranged in the casing.

6. The generator with closed-magnetic-path coils according to claim 1, wherein at least one low magnetic conductive material is disposed between adjacent magnetic conductive brackets, and a distance between the adjacent magnetic conductive brackets is greater than 0.001 mm.

7. The generator with closed-magnetic-path coils according to claim 1, wherein the coil winding or the conductor winding is formed by at least one or more windings connected in series or in parallel.

8. The generator with closed-magnetic-path coils according to claim 1, wherein the magnet is formed by at least one permanent magnet, at least one electromagnet, or at least one permanent magnet and at least one electromagnet.

9. The generator with closed-magnetic-path coils according to claim 1, wherein the coil winding or the conductor winding is formed by at least one conductive material arranged in a planar shape, an annular shape or a cylindrical shape.

10. The generator with closed-magnetic-path coils according to claim 1, wherein the coil winding or the conductor winding and an excitation coil in the drive motor share the same rotor and the same magnet.
